# EUROPÄISCHE PATENTSCHRIFT

(11) **EP 3 711 138 B1**
(45) Veröffentlichungstag und Bekanntmachung des Hinweises auf die Patenterteilung: **21.12.2022**
(21) Anmeldenummer: 18803372.4
(22) Anmeldetag: 08.11.2018
(51) Int. Cl.: H02J 7/00, B60L 53/00

(54) **LADESTATION FÜR ELEKTROFAHRZEUGE**
CHARGING STATION FOR ELECTRIC VEHICLES
STATION DE CHARGE POUR VÉHICULES ÉLECTRIQUES

(30) Priorität: 16.11.2017 DE 102017127002
(43) Veröffentlichungstag der Anmeldung: 23.09.2020
(73) Patentinhaber: Compleo Charging Solutions AG, 44309 Dortmund (DE)
(72) Erfinder: SIAENEN, Thorbjörn, 44287 Dortmund (DE); MÜLLER-WINTERBERG, Christian, 46282 Dorsten (DE); WAFFNER, Jürgen, 45307 Essen (DE)
(74) Vertreter: Gottschald Patentanwälte Partnerschaft mbB
(86) Internationale Anmeldenummer: PCT/EP2018/080579
(87) Internationale Veröffentlichungsnummer: WO 2019/096663

(56) Entgegenhaltungen:
- DE-A1-102009 024 721
- DE-U1-202017 100 174

## Beschreibung

Die Anmeldung betrifft eine Ladestation für Elektrofahrzeuge, umfassend mindestens ein Ladekabel mit mindestens einem Ladestecker, und mindestens eine Kabelaufhängungseinrichtung zum Halten des Ladekabels, wobei die Kabelaufhängungseinrichtung einen Abstand zu einer Bodenoberfläche, auf der ein zu ladendes Elektrofahrzeug angeordnet ist, aufweist, die zumindest größer ist als der Abstand der Steckeraufnahme des zu ladenden Elektrofahrzeugs zu der Bodenoberfläche. Darüber hinaus betrifft die Anmeldung einen Ladestecker für eine Ladestation.

Um das Betreiben von Elektrofahrzeugen, insbesondere von elektrisch betriebenen Autos aber auch von anderen Fahrzeugen, zu fördern, wird die Verkehrsinfrastruktur vermehrt mit Ladestationen versehen. Bekannte Ladestationen können über mindestens eine Steckeraufnahme verfügen, in die ein Ladestecker eines Ladekabels von einem Nutzer eingesetzt werden kann. Alternativ oder zusätzlich können Ladestationen über mindestens ein festangeschlagenes Ladekabel verfügen, welches einen (fest angeschlagenen) Ladestecker aufweist, der in eine Steckeraufnahme des Elektrofahrzeugs eingesetzt werden kann. Der Ladestecker des Ladekabels ist in der Regel ein Ladestecker Typ 2 nach der Norm IEC 62196-2.

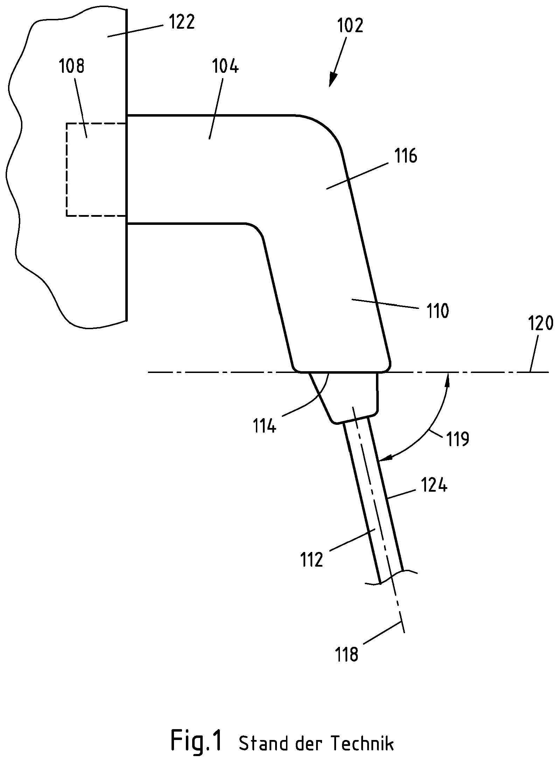

Die Figur 1 zeigt einen typischen Ladestecker 102 des Standes der Technik. Der Ladestecker 102 weist zunächst eine Kontaktanordnung 108 auf, die zu einer entsprechenden Steckeraufnahme 122 (z.B. von einem Elektrofahrzeug) elektrisch und mechanisch korrespondiert.

Vorliegend ist der Ladestecker 102 in einem eingesteckten Zustand dargestellt. Unter einem eingesteckten Zustand ist vorliegend eine (mechanische) Kopplung zwischen einem Ladestecker und einer Steckeraufnahme eines zu ladenden Fahrzeugs zu verstehen.

Die Kontaktanordnung 108 bildet ein Ende des Grundkörpers 104 des Ladesteckers 102. Für eine einfache Handhabung durch einen Nutzer weist der Ladestecker 102 an dem Grundkörper 104 typischerweise einen Griff 110 auf. Bei dem dargestellten Griff 110 handelt es sich insbesondere um einen sogenannten Pistolengriff 110 gesprochen. Dieser zeichnet sich insbesondere dadurch aus, dass der Pistolengriff 110 im eingesteckten Zustand, also wenn die Kontaktanordnung 108 in der Steckeraufnahme 122 eingesetzt ist, in Richtung einer (nicht dargestellten) Bodenfläche zeigt.

Wie ferner zu erkennen ist, ist es üblich, das Ladekabel 112 an dem Ende 114 des Griffs 110 in den Ladestecker einzuführen bzw. anzuschlagen. Der Bereich, an dem das Ladekabel 112 in den Ladestecker 102 eingeführt wird, insbesondere die Schnittfläche, wird auch als Anschlagspunktbereich 116 bezeichnet. Hierbei ist aus der Figur 1 zu erkennen, dass das Ladekabel 112 von unten an den Ladestecker 102, vorliegend an den Griff 110 des Ladesteckers 102, angeschlagen ist.

Ein "von unten" angeschlagenes Kabels ist insbesondere dadurch gekennzeichnet, dass, von der Bodenfläche im eingesteckten Zustand aus gesehen, ein unterer Winkel 119 zwischen dem Ladekabel 112, insbesondere dem Kabelmantel 124, und einer durch den Anschlagspunktbereich 116 verlaufenden (gedachten) horizontalen Ebene 120 vorliegt. Mit anderen Worten verläuft die horizontale Ebene durch die Schnittstelle zwischen Ladekabel 112 und Ladestecker 102. Ein unterer Winkel 119 ist hierbei insbesondere der Winkel 119, welcher (von der Bodenfläche im eingesteckten Zustand gesehen) unterhalb der horizontalen Ebene 124 verläuft. Insbesondere existiert vorliegend kein oberer Winkel, da das Ladekabel 112 von unten angeschlagen ist und daher oberhalb der horizontalen Ebene 120 kein Ladekabel 112 vorhanden ist.

Bei neuartigen Ladestationen ist insbesondere vorgesehen, diese mit einem Ladekabel auszustatten, welches einen größeren Querschnitt (bis zu 60 mm Durchmesser) aufweist. Der größere Querschnitt ermöglicht hierbei die Übertragung von größeren Ladeströmen (zwischen 0 A und 500 A) bzw. größeren Leistungen (zwischen 20 kW und 500 kW (bei einem Durchmesser bis zu 40 mm)).

Derartige Ladestationen können für das Ladekabel eine Kabelaufhängungseinrichtung aufweisen, die zumindest oberhalb (vom Boden aus gesehen) einer Steckeraufnahme eines zu ladenden Fahrzeugs liegt. Mit anderen Worten weist die Kabelaufhängungseinrichtung einen Abstand zu einer Bodenoberfläche auf, die zumindest größer ist als der Abstand der Steckeraufnahme eines zu ladenden Elektrofahrzeugs zu dieser (Bezugs-)Bodenoberfläche.

Bei derartigen Ladestationen gestaltet sich die Ladekabelanbindung bzw. - anschlagung "von unten", also wie zuvor beschrieben wurde, an den Ladestecker problematisch. So ist es entweder erforderlich, dass das Ladekabel aus einer Ladesäule einer Ladestation über die Bodenfläche verläuft oder bei einer zuvor beschriebenen Kabelaufhängungseinrichtung in S-Form mindestens zweimal gebogen werden muss. Beide Lösungen sind jedoch insbesondere bei Ladekabeln mit größerem Querschnitt unhandlich.

Daher liegt der Anmeldung die Aufgabe zugrunde, eine Ladestation mit einem Ladekabel bereitzustellen, welches auch bei einem vergrößerten Querschnitt einfach zu handhaben ist.

Die Aufgabe wird gemäß einem ersten Aspekt der Anmeldung durch eine Ladestation für Elektrofahrzeuge gemäß dem Anspruch 1 gelöst. Die Ladestation umfasst mindestens ein Ladekabel mit mindestens einem Ladestecker. Die Ladestation umfasst mindestens eine Kabelaufhängungseinrichtung zum Halten des Ladekabels. Die Kabelaufhängungseinrichtung weist einen Abstand zu einer Bodenoberfläche auf, auf der ein zu ladendes Elektrofahrzeug angeordnet ist und die zumindest größer ist als der Abstand der Steckeraufnahme des zu ladenden Elektrofahrzeugs zu der Bodenoberfläche. In einem Anschlusspunktbereich des Ladekabels liegt zwischen dem Ladekabel und einer horizontalen, durch den Anschlusspunktbereich verlaufenden Ebene in einem eingesteckten Zustand des Ladesteckers von der Bodenoberfläche aus gesehen, ein erster oberer Winkel vor, der zwischen 1° und 90° liegt.

Da im Gegensatz zum Stand der Technik das Ladekabel von "oben" an den Ladestecker angeschlagen ist, indem zwischen dem Ladekabel und einer horizontalen, durch den Anschlusspunktbereich verlaufenden Ebene in einem eingesteckten Zustand des Ladesteckers ein erster oberer Winkel vorliegt, wird die Handhabung des Ladekabels verbessert. Insbesondere ist die Anbindung des Ladekabels an den Ladestecker derart, dass eine zweifache Biegung des Ladekabels vermieden wird. Allenfalls kann eine einmalige Biegung des Ladekabels im Bereich der Kabelaufhängungseinrichtung vorgesehen sein. Hierdurch können insbesondere Ladekabel mit einem größeren Querschnitt leichter gehandhabt werden. Derartige Ladekabel ermöglichen die Übertragung von größeren Ladeströmen (zwischen 0 A und 500 A) bzw. größeren Leistungen (zwischen 20 kW und 500 kW (bei einem Durchmesser bis zu 40 mm)).

Die anmeldungsgemäße Ladestation umfasst mindestens ein Ladekabel. Es versteht sich, dass die Ladestation zwei oder mehr Ladekabel umfassen kann. Vorzugsweise kann das mindestens eine Ladekabel fest mit einer Ladevorrichtung verbunden sein. Unter einer festen Verbindung ist insbesondere zu verstehen, dass ein Nutzer das Ladekabel nicht zerstörungsfrei von der Ladevorrichtung trennen kann. Die Ladevorrichtung kann in herkömmlicher Weise über Komponenten verfügen, um einen bestimmten Stromfluss von einer Stromquelle (z.B. ein öffentliches Stromnetz) über das Ladekabel zu ermöglichen, um ein elektrisch betriebenes Fahrzeug bzw. dessen elektrischen Energiespeicher zu laden. Die Ladevorrichtung kann in Form einer Ladesäule oder "Wallbox" gebildet sein. Auch kann die Ladevorrichtung, insbesondere die Komponenten bzw. die Ladetechnik in einer Wand oder einem Boden integriert sein. Es versteht sich, dass eine bidirektionale Strom- bzw. Leistungsübertragung erfolgen kann.

Die Ladestation verfügt über mindestens eine Kabelaufhängungseinrichtung. Die Kabelaufhängungseinrichtung ist insbesondere eingerichtet, das Ladekabel an mindestens einem Aufhängungspunkt zu halten. Hierbei ist vorgesehen, dass die Kabelaufhängungseinrichtung einen Abstand zu einer Bodenoberfläche aufweist, auf der ein zu ladendes Elektrofahrzeug angeordnet ist, der zumindest größer ist als der Abstand der Steckeraufnahme des zu ladenden Elektrofahrzeugs zu der Bodenoberfläche. Hierdurch kann sichergestellt werden, dass das Ladekabel nicht die Bodenfläche (z.B. Straßen- oder Parkplatzoberfläche) berührt. Neben einer verbesserten Handhabung durch den Nutzer wird erreicht, dass eine Beschädigung und/oder Verschmutzung des Ladekabels aufgrund einer Bodenflächenberührung vermieden wird. Zudem wird hierdurch ermöglicht, dass das Ladekabel von oben dem Ladestecker zugeführt werden kann, ohne dass eine Verbiegung des Ladekabels erforderlich ist.

Anmeldungsgemäß ist vorgesehen, dass das Ladekabel von oben an den Ladestecker angeschlagen ist. Dies wird dadurch erreicht, dass anmeldungsgemäß ein oberer Winkel anstelle eines unteren Winkels (siehe Fig. 1) vorgesehen ist. Ein "von oben" angeschlagenes Ladekabel ist vorliegend dadurch gekennzeichnet, dass, von der Bodenfläche im eingesteckten Zustand aus gesehen, ein erster oberer Winkel zwischen dem Ladekabel, insbesondere dem Kabelmantel des Ladekabels, und einer durch den Anschlagspunktbereich verlaufenden (gedachten) horizontalen Ebene vorgesehen ist, der zwischen 1° und 90° liegt.

Die horizontale Ebene verläuft hierbei durch die Schnittstelle bzw. den Schnittstellenbereich zwischen Ladekabel und Ladestecker. Ein oberer Winkel ist hierbei insbesondere der Winkel, welcher (von der Bodenfläche im eingesteckten Zustand aus gesehen) oberhalb der horizontalen Ebene liegt. Insbesondere existiert vorliegend kein unterer Winkel, da das Ladekabel von oben angeschlagen ist und daher unterhalb der horizontalen Ebene kein Ladekabelstück (welches außerhalb des Gehäuses des Ladesteckers liegt) vorhanden ist.

Unter einem eingesteckten Zustand ist vorliegend eine (mechanische) Kopplung zwischen einem Ladestecker und einer Steckeraufnahme eines zu ladenden Fahrzeugs zu verstehen.

Von oben angeschlagen meint in der Regel, dass in dem eingesteckten Zustand von der Bodenoberfläche aus der Anschlagspunktbereich zumindest teilweise, insbesondere vollständig oberhalb einer horizontalen Ebene, welche durch die Längsachse eines Grundkörpers des Ladesteckers verläuft, liegt.

Gemäß einer ersten Ausführungsform der anmeldungsgemäßen Ladestation kann der erste obere Winkel zwischen 30 ° und 90° liegen. Insbesondere kann der erste obere Winkel zwischen 45° und 90° liegen. Indem ein Winkel zwischen vorzugsweise 45° und 90° gewählt wird, kann eine notwendige Verformung des Ladekabels minimiert und damit die Handhabung verbessert werden.

Vorzugsweise kann die Kabelaufhängungseinrichtung eine Galgenaufhängung sein. Eine Galgenaufhängung stellt eine sichere Aufhängung für ein Ladekabel zur Verfügung. Gleichzeitig kann eine einfache Bedienbarkeit und Beweglichkeit des Ladekabels bereitgestellt werden. Hierdurch ist insbesondere eine benutzerfreundliche Einsetzung des Ladesteckers in eine Steckeraufnahme eines Fahrzeugs gewährleistet.

Gemäß einer bevorzugten Ausführungsform kann das Ladekabel mindestens eine Zugentlastungsanordnung aufweisen. Die Zugentlastungsanordnung kann zur Zugentlastung der mindestens einen elektrischen Leitung des Ladekabels eingerichtet sein. Vorzugsweise können sämtliche elektrische Leitungen des Ladekabels (z.B. mindestens ein Phasenleiter, Pilotleiter etc.) durch die Zugentlastungsanordnung entlastet werden. Durch das Vorsehen einer Zugentlastungsanordnung kann die mindestens eine elektrische Leitung vor erhöhten mechanischen Beanspruchungen geschützt werden.

Besonders bevorzugt kann die Zugentlastungsanordnung gemäß einer weiteren Ausführung der anmeldungsgemäßen Ladestation durch ein Zugentlastungsseil (insbesondere ein separates, von den elektrischen Leitungen mechanisch getrenntes Seil) innerhalb des Ladekabels gebildet sein. Das Zugentlastungsseil kann zwischen einem Aufhängungspunkt innerhalb des Ladesteckers und einem Aufhängungspunkt innerhalb einer Ladevorrichtung angeordnet, insbesondere gespannt sein. Beispielsweise kann in einem Grundkörper des Ladesteckers als Aufhängungspunkt eine Verankerungseinrichtung zum Befestigen des Zugentlastungsseils vorgesehen sein. In entsprechender Weise kann eine Verankerungseinrichtung zum Befestigen des Zugentlastungsseils in oder an der Ladevorrichtung vorgesehen sein.

Vorzugsweise kann die Anordnung des Zugentlastungsseils derart sein, dass die Länge des Zugentlastungsseils in dem Ladekabel im Vergleich zu der Länge der mindestens einen elektrischen Leitung, vorzugsweise sämtlicher elektrischer Leitungen, geringer ist. Beispielsweise kann die Länge des Zugentlastungsseils zwischen 2 % und 10 % geringer sein, als die Länge der mindestens einen elektrischen Leitung. Beispielsweise können die elektrischen Leitungen eine Länge von 3,2 m und das Zugentlastungsseil von 3 m aufweisen. Entsprechende Verhältnisse können für andere Ladekabellängen genutzt werden.

Alternativ oder zusätzlich kann die Zugentlastungsanordnung durch den Kabelmantel des Ladekabels gebildet sein. Der Kabelmantel bzw. die Außenisolierung des Ladekabels kann in ähnlicher Weise wie das zuvor beschriebene Zugentlastungsseil eine gegenüber der Länge der mindestens einen elektrischen Leitung verkürzte Länge aufweisen. Zudem kann der Kabelmantel durch geeignetes Material (Metall, Nylon etc.) zumindest verstärkt und/oder hieraus gebildet sein. In einfacher Weise kann eine Zugentlastungsanordnung gebildet werden.

Ferner ist erkannt worden, dass es für eine leicht zu handhabende Einführung eines Ladesteckers in eine hierzu korrespondierende Steckeraufnahme bzw. Steckerbuchse der Nutzer einen freien Blick auf die Steckeraufnahme haben sollte. Um auch bei einer Einfügung des Ladekabels von oben in den Ladestecker dem Nutzer eine möglichst gute Sicht zu ermöglichen, wird gemäß einer bevorzugten Ausführungsform der Anmeldung vorgeschlagen, dass in dem Anschlusspunktbereich des Ladekabels zwischen dem Ladekabel und einer vertikalen, durch den Anschlusspunktbereich des Ladekabels verlaufenden Ebene in dem eingesteckten Zustand des Ladesteckers von der Bodenoberfläche aus gesehen ein weiterer oberer Winkel vorliegt, der zwischen 5° und 85°, insbesondere zwischen 15° und 45 °, liegt. Mit anderen Worten kann das Ladekabel schräg von oben in dem eingesteckten Zustand des Ladesteckers eingeführt sein. Hierdurch wird der Blick des Nutzers bei der Einführung des Ladesteckers in eine Ladebuchse bzw. Steckeraufnahme nicht durch das von oben angeschlagene Ladekabel beeinträchtigt. Insbesondere kann der weitere obere Winkel derart gewählt sein, dass eine Führungsnut einer Steckeraufnahme für den Nutzer sichtbar ist (ohne dass ein Verdrehen des Kopfes oder dergleichen erforderlich ist).

Darüber hinaus kann der Durchmesser des Ladekabels gemäß einer weiteren Ausführungsform mindestens 8 mm, vorzugsweise mindestens 30 mm, betragen. Insbesondere kann der Durchmesser des Ladekabels zwischen 30 mm und 60 mm liegen. Durch die anmeldungsgemäße Ankopplung des Ladekabels an den Ladestecker können auch Ladekabel mit derartigen Durchmessern zwischen 30 mm und 60 mm (und darüber hinaus) einfach gehandhabt werden.

Für eine besonders nutzerfreundliche Handhabung kann an einem Grundkörper des Ladesteckers gemäß einer weiteren Ausführungsform mindestens ein Griff, insbesondere in Form eines Pistolengriffs, angeordnet sein.

Um die oben genannten höheren Ströme bzw. Leistungen über ein Ladekabel übertragen zu können, kann das Ladekabel und/oder der Ladestecker gemäß einer bevorzugten Ausführungsform mindestens eine Kühlungsanordnung umfassen. Insbesondere kann die mindestens eine Kühlungsanordnung eine Flüssigkeitskühlungsanordnung und/oder eine Gaskühlungsanordnung (z.B. Luftkühlung) aufweisen. Zwar wird durch das Vorsehen einer Kühlungsanordnung der Durchmesser des Ladekabels weiter vergrößert. Aufgrund der anmeldungsgemäßen Anbindung des Ladekabels an den Ladestecker von oben wird hierdurch die Handhabung des Ladekabels jedoch nicht (oder zumindest nicht wesentlich) beeinträchtigt.

Ein weiterer Aspekt der Anmeldung ist ein Ladestecker für ein Ladekabel einer Ladestation, insbesondere einer zuvor beschriebenen Ladestation, für Elektrofahrzeuge. Der Ladestecker umfasst in einem Anschlusspunktbereich des Ladekabels zwischen dem Ladekabel und einer horizontalen, durch den Anschlusspunktbereich verlaufenden Ebene in einem eingesteckten Zustand des Ladesteckers von der Bodenoberfläche aus gesehen, einen ersten oberen Winkel, der zwischen 1° und 90° liegt. Der Ladestecker ist insbesondere ein zuvor beschriebener Ladestecker, an dem ein Ladekabel von oben - wie zuvor beschrieben wurde - angeschlagen ist.

Die Merkmale der Ladestation und des Ladesteckers sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäßen Ladestation und den anmeldungsgemäßen Ladestecker auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ladestecker gemäß dem Stand der Technik,
- Fig. 2: eine schematische Ansicht eines Ausführungsbeispiels einer Ladestation gemäß der vorliegenden Anmeldung,
- Fig. 3a: eine schematische (Vorder-)Ansicht eines Ausführungsbeispiels eines Ladesteckers gemäß der vorliegenden Anmeldung,
- Fig. 3b: eine schematische (Seiten-)Ansicht des Ausführungsbeispiels des Ladesteckers gemäß Figur 3a, und
- Fig. 3c: eine schematische (Drauf-)Ansicht des Ausführungsbeispiels des Ladesteckers gemäß Figur 3a.

In den Figuren werden für gleiche Elemente gleiche Bezugszeichen verwendet.

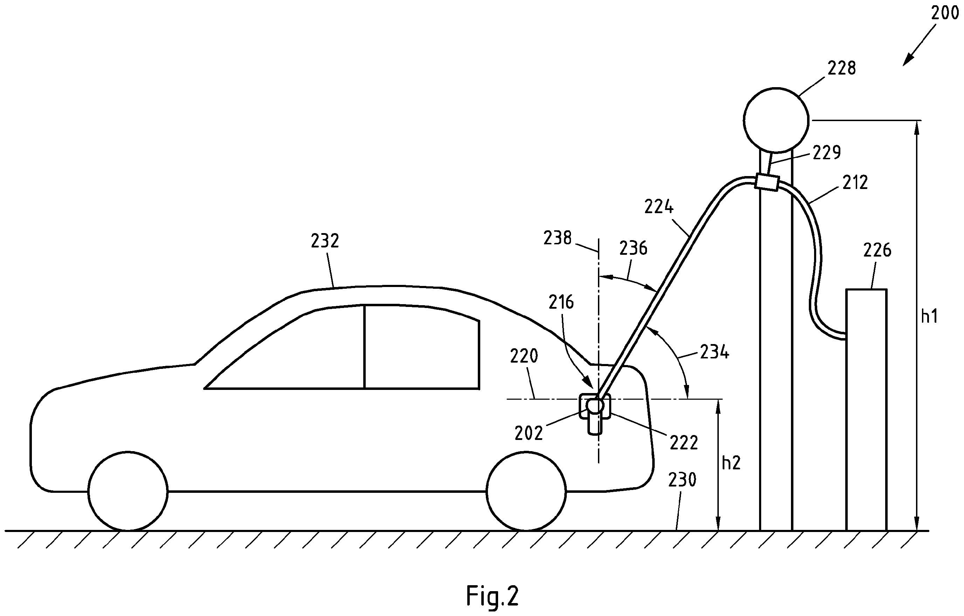

Die Figur 2 zeigt eine schematische Ansicht eines Ausführungsbeispiels einer Ladestation 200 gemäß der vorliegenden Anmeldung. Die Ladestation 200 umfasst vorliegend eine Ladevorrichtung 226 (z.B. Ladesäule 226), mindestens ein an der Ladevorrichtung 226 befestigtes Ladekabel 212 und mindestens eine Kabelaufhängungseinrichtung 228.

Die Ladevorrichtung 226 kann elektrisch an eine (nicht gezeigte) Stromquelle, insbesondere ein öffentliches Stromnetz, angeschlossen sein. Die Ladevorrichtung kann Komponenten, insbesondere Ladetechnik (z.B. elektrische Schalter, elektrische Sicherheitseinrichtungen, elektrische Messeinrichtungen, Steuereinrichtungen etc.), umfassen, um insbesondere ein Laden eines elektrisch betriebenen Fahrzeugs 232, insbesondere eines (nicht gezeigten) elektrischen Energiespeichers eines Elektrofahrzeugs 232, zu ermöglichen.

Das insbesondere fest an der Ladevorrichtung 226 angeschlagene Ladekabel 212 wird von mindestens einer Kabelaufhängungseinrichtung 228 getragen bzw. gehalten. Vorliegend handelt es sich bei der Kabelaufhängungseinrichtung 228 um eine Galgenaufhängung 228. Die Galgenaufhängung 228 kann beispielsweise einen Aufrollmechanismus 229 aufweisen. Insbesondere kann die Länge der Verbindung 229 durch eine manuelle Nutzeraktion vergrößert werden, um den Ladestecker 202 in die Steckeraufnahme 222 des Fahrzeugs 232 einzusetzen. Aufgrund der Aufrollfunktion des Aufrollmechanismus 229 verkürzt sich die Länge automatisch nach einer Trennung von Ladestecker 202 und Steckeraufnahme 222 wieder.

Wie ferner aus der Figur 2 zu erkennen ist, ist der Abstand hi zwischen der Bodenfläche 230, auf dem das Fahrzeug 232 angeordnet ist, und der Galgenaufhängung 228 zumindest größer als der Abstand h₂ zwischen der Bodenfläche 230 und der Steckeraufnahme 222 des Fahrzeugs 232. Dies bringt den Vorteil mit sich, dass das Ladekabel 212 im gezeigten eingesteckten Zustand des Ladesteckers 202 dem Ladestecker 202 von oben zugeführt werden kann.

Es versteht sich, dass eine Ladestation 200 über zwei oder mehr Ladekabel und/oder über zwei oder mehr Kabelaufhängungseinrichtungen verfügen kann. Auch kann eine Ladevorrichtung und/oder eine Kabelaufhängungseinrichtung mechanisch unterschiedliche gebildet sein. So kann die Kabelaufhängungseinrichtung beispielsweise direkt an der Ladevorrichtung angeordnet sein und eine zusammen mit der Ladevorrichtung eine kompakte Einheit bilden.

Wie bereits beschrieben wurde, ist die Ladestation 200 bzw. der Ladestecker 202 der Ladestation vorliegend in dem eingesteckten Zustand dargestellt. Mit anderen Worten ist der Ladestecker 202 in der Steckeraufnahme 222 des zu ladenden Fahrzeugs 232 eingesetzt. Es liegt zumindest eine mechanische Kopplung vor.

In diesem Zustand ist das Ladekabel 212 an dem Ladestecker 202 von oben eingeführt. Hierunter ist zu verstehen, dass in dem Anschlusspunktbereich 216, also der Schnittstelle zwischen Ladestecker 202, insbesondere dem Gehäuse des Ladesteckers 202, und dem Ladekabel 212 ein erster oberer Winkel 234 zwischen einer horizontalen, durch den Anschlusspunktbereich 216 verlaufenden (virtuellen) Ebene 220 und dem Ladekabel 212, insbesondere dem Mantel 224 des Ladekabels 212, existiert. Für den Fall, dass die Schnittstelle bzw. Schnittfläche zwischen Ladekabel und Ladestecker keine horizontale Ebene bildet, verläuft die (virtuelle) Ebene allgemein durch den von der Bodenfläche 230 aus gesehen untersten Schnittpunkt.

Wie insbesondere zu erkennen ist, existiert kein unterer Winkel zwischen dem Ladekabel 212 und der Ebene 220. Grund hierfür ist, dass kein (außerhalb des Gehäuses des Ladesteckers liegendes) Kabelstück unterhalb der horizontalen Ebene 220 vorhanden ist. Der erste obere Winkel 234 liegt zwischen 1° und 90°, insbesondere zwischen 45° und 90°.

Darüber hinaus ist in dem vorliegenden Ausführungsbeispiel vorgesehen, dass das Ladekabel 212 schräg von oben an dem Ladestecker 202 angeschlagen ist. Hierunter ist insbesondere zu verstehen, dass in dem Anschlusspunktbereich 216 des Ladekabels 212 zwischen dem Ladekabel 212, insbesondere dem Mantel 224, und einer vertikalen, durch den Anschlusspunktbereich 216 des Ladekabels 212 verlaufenden Ebene 238 in dem eingesteckten Zustand des Ladesteckers 202 von der Bodenoberfläche 230 aus gesehen ein weiterer oberer Winkel 236 vorliegt, der zwischen 5° und 85°, insbesondere zwischen 15° und 45 °, liegt. Durch diese optionale Maßnahme hat der Nutzer beim Einsteckvorgang einen freien Blick auf die Steckeraufnahme 222 des Fahrzeugs 232.

Ferner kann das Ladekabel 212 über eine (nicht gezeigte) Zugentlastungsanordnung (z.B. ein separates zuvor beschriebenes Zugentlastungsseil und/oder einen entsprechend gebildeten Kabelmantel 224) verfügen. Um insbesondere bei der Übertragung hoher Ströme bzw. Leistungen eine Beschädigung zu verhindern, kann das Ladekabel 212 eine (nicht gezeigte) Flüssigkeitskühlungsanordnung und/oder eine Gaskühlungsanordnung aufweisen. Ein entsprechendes Ladekabel 212 kann einen Durchmesser zwischen 30 mm und 80 mm, insbesondere von 60 mm, aufweisen. Aufgrund der Anbindung des Ladekabels 212 von oben an den Ladestecker 202 lassen sich auch derartige Ladekabel 212 von einem Nutzer leicht handhaben.

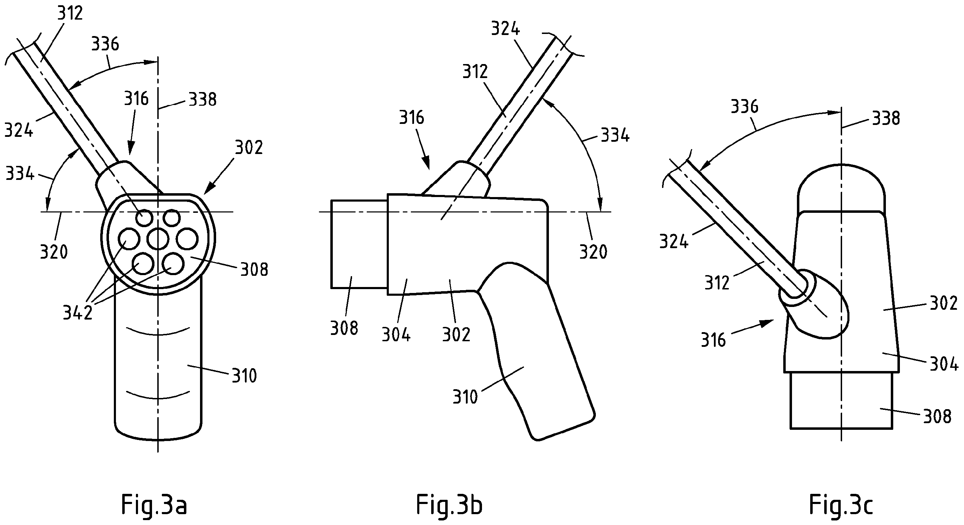

Die Figuren 3a bis 3c zeigen schematische Ansichten eines Ausführungsbeispiels eines Ladesteckers 302 gemäß der vorliegenden Anmeldung. Zur Vermeidung von Wiederholungen werden im Wesentlichen nachfolgend nur die Unterschiede zu dem Ladestecker 202 nach Figur 2 erläutert. Ansonsten wird auf die obigen Ausführungen verwiesen.

Der dargestellte Ladestecker 302 des Ladekabels 312 ist vorliegend ein Ladestecker Typ 2 nach der Norm IEC 62196-2. Es versteht sich, dass sich die nachfolgenden Ausführungen auf andere Ladestecker (z.B. Combo2-Stecker) übertragen lassen.

Die Figur 3a zeigt eine schematische (Vorder-)Ansicht, die Figur 3b eine schematische (Seiten-)Ansicht und die Figur 3c eine schematische (Drauf-)Ansicht eines Ausführungsbeispiels eines Ladesteckers 302 gemäß der vorliegenden Anmeldung.

Entsprechend den obigen Ausführungen ist ein erster oberer Winkel 334 in dem Anschlusspunktbereich 316 zwischen dem Ladekabel 312, insbesondere dem Mantel 324, und einer horizontalen, durch den Anschlusspunktbereich 316 (insbesondere am untersten Punkt) verlaufenden Ebene 320 in einem eingesteckten Zustand des Ladesteckers (nicht im Detail dargestellt), von der nicht gezeigten Bodenoberfläche aus gesehen, vorgesehen. Zudem ist ein weiterer oberer Winkel 336 in dem Anschlusspunktbereich 316 zwischen dem Ladekabel 312, insbesondere dem Mantel 324, und einer vertikalen, durch den Anschlusspunktbereich 316 des Ladekabels 312 verlaufenden Ebene 338 in dem eingesteckten Zustand des Ladesteckers 302, von der Bodenoberfläche aus gesehen, vorgesehen.

Darüber hinaus umfasst der Ladestecker 302 eine Kontaktanordnung 308 mit einer Mehrzahl von Anschlusspins 342, einen Grundkörper 304 und einen Griff 310, insbesondere einen Pistolengriff 310. Im Gegensatz zum Stand der Technik wird das Ladekabel 312 nicht von unten durch den Griff 310 eingeführt, sondern von oben durch den Grundkörper 304. Mit anderen Worten ist das Ladekabel 312 von oben an dem Grundkörper 304 angeschlagen.

Der dargestellte Ladestecker 302 kann zwischen 200 und 300 mm, beispielsweise 250 mm, lang sein (einschließlich Griff 310, Kontaktanordnung 308 bzw. Buchsenkontakte 308). Der Buchsenkontakt 308 kann eine Länge zwischen 20mm und 60 mm, insbesondere zwischen 30mm und 50 mm aufweisen (z.B.: 35 mm für den Typ2-Stecker und 40 mm für einen Combo2-Stecker).

Ein anmeldungsgemäßer Ladestecker kann zudem über eine (nicht gezeigte) optische Anzeigeneinrichtung verfügen, wie zuvor beschrieben wurde.

In den Figuren wurde beispielhaft ein AC Stecker 302 dargestellt und beschrieben. Es versteht sich, dass die obigen Ausführungen auf einen DC-Stecker (mit entsprechender Kabeldurchmesser) übertragen werden können.

## Patentansprüche

1. Ladestation (200) für Elektrofahrzeuge (232), umfassend:
- mindestens ein Ladekabel (212, 312) mit mindestens einem Ladestecker (202, 302), und
- mindestens eine Kabelaufhängungseinrichtung (228) zum Halten des Ladekabels (212, 312),
- wobei die Kabelaufhängungseinrichtung (228) einen Abstand (h1) zu einer Bodenoberfläche (230), auf der ein zu ladendes Elektrofahrzeug (232) angeordnet ist, aufweist, die zumindest größer ist als der Abstand (h2) der Steckeraufnahme (222) des zu ladenden Elektrofahrzeugs (232) zu der Bodenoberfläche (230),
- wobei in einem Anschlusspunktbereich (216, 316) des Ladekabels (212, 312) zwischen dem Ladekabel (212, 312) und einer horizontalen, durch den Anschlusspunktbereich (216, 316) verlaufenden Ebene (220, 320) in einem eingesteckten Zustand des Ladesteckers (202, 302) von der Bodenoberfläche (230) aus gesehen, ein erster oberer Winkel (234, 334) vorliegt, der zwischen 1° und 90° liegt,
**dadurch gekennzeichnet, dass**
- in dem Anschlusspunktbereich (216, 316) des Ladekabels (212, 312) zwischen dem Ladekabel (212, 312) und einer vertikalen durch die Längsachse eines Grundkörpers (204, 304) des Ladesteckers (202, 302) und durch den Anschlusspunktbereich (216, 316) des Ladekabels (212, 312) verlaufenden Ebene (238, 338) in dem eingesteckten Zustand des Ladesteckers (202, 302) von der Bodenoberfläche (230) aus gesehen ein weiterer oberer Winkel (236, 336) vorliegt, der zwischen 5° und 85° liegt.

2. Ladestation (200) nach Anspruch 1, **dadurch gekennzeichnet, dass** der erste obere Winkel (234, 334) zwischen 30 ° und 90°, insbesondere zwischen 45° und 90°, liegt.

3. Ladestation (200) nach Anspruch 1 oder 2, **dadurch gekennzeichnet, dass** die Kabelaufhängungseinrichtung (228) eine Galgenaufhängung (228) ist.

4. Ladestation (200) nach einem der vorherigen Ansprüche, **dadurch gekennzeichnet, dass** das Ladekabel (212, 312) mindestens eine Zugentlastungsanordnung, eingerichtet zur Zugentlastung der mindestens einen elektrischen Leitung des Ladekabels (212, 312), aufweist.

5. Ladestation (200) nach Anspruch 4, **dadurch gekennzeichnet, dass** die Zugentlastungsanordnung durch ein Zugentlastungsseil innerhalb des Ladekabels (212, 312) und/oder durch den Kabelmantel (224, 324) des Ladekabels (212, 312) gebildet ist.

6. Ladestation (200) nach einem der vorherigen Ansprüche, **dadurch gekennzeichnet, dass** der weitere obere Winkel (236, 336) zwischen 15° und 45 ° liegt.

7. Ladestation (200) nach einem der vorherigen Ansprüche, **dadurch gekennzeichnet, dass** der Durchmesser des Ladekabels (212, 312) mindestens 8 mm, vorzugsweise mindestens 30 mm, betragen.

8. Ladestation (200) nach einem der vorherigen Ansprüche, **dadurch gekennzeichnet, dass** an einem Grundkörper (304) des Ladesteckers (202, 302) mindestens ein Griff (310), insbesondere in Form eines Pistolengriffs (310), angeordnet ist.

9. Ladestation (200) nach einem der vorherigen Ansprüche, **dadurch gekennzeichnet, dass** das Ladekabel (212, 312) und/oder der Ladestecker (202, 302) mindestens eine Kühlungsanordnung, insbesondere eine Flüssigkeitskühlungsanordnung und/oder eine Gaskühlungsanordnung, aufweisen.

## Claims

1. Charging station (200) for electric vehicles (232), comprising:
- at least one charging cable (212, 312) with at least one charging plug (202, 302), and
- at least one cable suspension device (228) for holding the charging cable (212, 312),
- wherein the cable suspension device (228) has a distance (h1) from a base surface (230) on which an electric vehicle (232) to be charged is arranged which is at least greater than the distance (h2) from the base surface (230) to the plug receiving area (222) of the electric vehicle (232) to be charged,
- wherein when viewed from the base surface (230) when the charging plug (202, 302) is plugged in, in a connection point region (216, 316) of the charging cable (212, 312) there is a first upper angle (234, 334) which lies between 1° and 90° between the charging cable (212, 312) and a horizontal plane (220, 320) running through the connection point region (216, 316),
**characterized in that**
- when viewed from the base surface (230) when the charging plug (202, 302) is plugged in, in the connection point region (216, 316) of the charging cable (212, 312) there is a further upper angle (236, 336) which lies between 5° and 80° between the charging cable (212, 312) and a vertical plane (238, 338) running through the longitudinal axis of a main body (204, 304) of the charging plug (202, 302) and through the connection point region (216, 316) of the charging cable (212, 312).

2. Charging station (200) according to Claim 1, **characterized in that** the first upper angle (234, 334) lies between 30° and 90°, in particular between 45° and 90°.

3. Charging station (200) according to Claim 1 or 2, **characterized in that** the cable suspension device (228) is a gallows suspension (228).

4. Charging station (200) according to one of the preceding claims, **characterized in that** the charging cable (212, 312) has at least one strain relief arrangement, set up to relieve the strain on the at least one electrical line of the charging cable (212, 312).

5. Charging station (200) according to Claim 4, **characterized in that** the strain relief arrangement is formed by a strain relief cord within the charging cable (212, 312) and/or through the cable sheath (224, 324) of the charging cable (212, 312).

6. Charging station (200) according to one of the preceding claims, **characterized in that** the further upper angle (236, 336) lies between 15° and 45°.

7. Charging station (200) according to one of the preceding claims, **characterized in that** the diameter of the charging cable (212, 312) is at least 8 mm, preferably at least 30 mm.

8. Charging station (200) according to one of the preceding claims, **characterized in that** at least one handle (310), in particular in the form of a pistol grip (310), is arranged on a main body (304) of the charging plug (202, 302).

9. Charging station (200) according to one of the preceding claims, **characterized in that** the charging cable (212, 312) and/or the charging plug (202, 302) has/have at least one cooling arrangement, in particular a liquid cooling arrangement and/or a gas cooling arrangement.

## Revendications

1. Station de charge (200) destinée à des véhicules électriques (232), ladite station de charge comprenant :
- au moins un câble de charge (212, 312) pourvu d'au moins une prise de charge mâle (202, 302), et
- au moins un dispositif de suspension de câble (228) destiné à maintenir le câble de charge (212, 312),
- le dispositif de suspension de câble (228) étant à une distance (hl) d'une surface de sol (230) sur laquelle est disposé un véhicule électrique (232) à charger, laquelle distance (h1) est au moins supérieure à la distance (h2) de la prise femelle (222) du véhicule électrique à charger (232) à la surface de sol (230),
- dans une zone de point de raccordement (216, 316) du câble de charge (212, 312), un premier angle supérieur (234, 334) qui est compris entre 1° et 90°, étant formé entre le câble de charge (212, 312) et un plan horizontal (220, 320) passant par la zone de point de raccordement (216, 316) lorsque la prise de charge mâle (202, 302) est insérée, dans une vue depuis la surface de sol (230),
**caractérisée en ce que**
- dans la zone de point de raccordement (216, 316) du câble de charge (212, 312), un autre angle supérieur (236, 336) compris entre 5° et 85° est formé entre le câble de charge (212, 312) et un plan vertical (238, 338) passant par l'axe longitudinal d'un corps de base (204, 304) de la prise de charge mâle (202, 302) et par la zone de point de raccordement (216, 316) du câble de charge (212, 312) lorsque la prise de charge mâle (202, 302) est insérée, dans une vue depuis la surface de sol (230) .

2. Station de charge (200) selon la revendication 1, **caractérisée en ce que** le premier angle supérieur (234, 334) est compris entre 30° et 90°, notamment entre 45° et 90°.

3. Station de charge (200) selon la revendication 1 ou 2, **caractérisée en ce que** le dispositif de suspension de câble (228) est une suspension à perche (228) .

4. Station de charge (200) selon l'une des revendications précédentes, **caractérisée en ce que** le câble de charge (212, 312) comporte au moins un ensemble de décharge en traction conçu pour décharger en traction l'au moins une ligne électrique du câble de charge (212, 312).

5. Station de charge (200) selon la revendication 4, **caractérisée en ce que** l'ensemble de décharge en traction est formé par un filin de décharge en traction situé à l'intérieur du câble de charge (212, 312) et/ou par la gaine de câble (224, 324) du câble de charge (212, 312).

6. Station de charge (200) selon l'une des revendications précédentes, **caractérisé en ce que** l'autre angle supérieur (236, 336) est compris entre 15° et 45°.

7. Station de charge (200) selon l'une des revendications précédentes, **caractérisée en ce que** le diamètre du câble de charge (212, 312) est d'au moins 8 mm, de préférence d'au moins 30 mm.

8. Station de charge (200) selon l'une des revendications précédentes, **caractérisée en ce qu'**au moins une poignée (310), notamment en forme de crosse de pistolet (310), est disposée sur un corps de base (304) de la prise de charge mâle (202, 302).

9. Station de charge (200) selon l'une des revendications précédentes, **caractérisée en ce que** le câble de charge (212, 312) et/ou la prise de charge mâle (202, 302) comportent au moins un ensemble de refroidissement, notamment un ensemble de refroidissement par liquide et/ou un ensemble de refroidissement par gaz.
